# DEMANDE DE BREVET EUROPEEN

(11) **EP 2 469 759 A1**
(43) Date de publication de la demande: **27.06.2012**
(21) Numéro de dépôt: 11192347.0
(22) Date de dépôt: 07.12.2011
(51) Int. Cl.: H04L 12/24, H04L 12/12, H04L 12/28

(54) **Procédé de gestion de la consommation électrique**

(30) Priorité: 23.12.2010 FR 1061200
(71) Demandeur: France Telecom, 75015 Paris (FR)
(72) Inventeur: Becot, Sylvain, 35850 ROMILLE (FR); Mardon, Gil, 35310 CINTRE (FR); Marchand, Hervé, 35770 VERN SUR SEICHE (FR)
(74) Mandataire: Le Saux, Gaël

(57) **Abrégé**

L'invention concerne un procédé de gestion de la consommation électrique dans un réseau de communication comprenant des équipements qui sont aptes à échanger des données et des éléments d'infrastructure qui sont aptes à interconnecter au moins deux desdits équipements via ledit réseau.

Selon l'invention, une unité de coordination met en oeuvre une base de données associant à un ensemble d'au moins deux équipements une liste d'éléments d'infrastructure nécessaires pour interconnecter lesdits équipements, et contrôle l'activation ou la désactivation d'éléments d'infrastructure en tenant compte de la liste correspondante, lorsqu'un ensemble d'équipements est sélectionné par un utilisateur, par l'intermédiaire de moyens de contrôle dont sont équipés au moins certains desdits équipements et/ou desdits éléments d'infrastructure, et le procédé met en oeuvre une procédure de mise à jour de ladite base de données lorsqu'un nouvel équipement ou un nouvel élément d'infrastructure est inséré dans ledit réseau de communication.

## Description

### 1 DOMAINE DE L'INVENTION

La présente invention concerne de façon générale les systèmes et procédés de gestion de la consommation électrique d'un réseau local, notamment des équipements présentant au moins deux états de consommation électrique dans ce réseau local. La présente invention concerne également les éléments d'infrastructure de ce réseau ainsi qu'un équipement référent susceptible de commander la fonction de gestion de la consommation électrique.

### 2 SOLUTIONS DE L'ART ANTERIEUR

Les réseaux locaux, qu'ils soient de type domestique, d'entreprise, domotique ou autres, sont constitués d'une pluralité d'équipements électriques consommateurs d'énergie électrique interconnectés au moyen de ces réseaux.

La consommation d'énergie électrique de ces équipements est généralement fonction de l'état électrique dans lequel ils sont placés, par exemple :
- un état de veille mettant fin à toutes les fonctions de l'équipement et qui réduit considérablement la consommation électrique de l'équipement ;
- un état de fonctionnement optimal dans lequel l'équipement fournit l'intégralité de ses fonctions mais qui présente l'inconvénient d'être un grand consommateur d'énergie électrique ;
- ou des états intermédiaires dans lesquels certaines fonctions sont désactivées pour réduire cette consommation électrique tout en gardant l'équipement en partie opérationnel.

Les récentes préoccupations écologiques renforcent les besoins de réduire les consommations d'énergie. A cette fin, une bonne gestion de la mise dans un état de consommation approprié est nécessaire pour chaque équipement d'un réseau local.

L'étude des différents cas d'utilisation des équipements présents par exemple dans la maison montre que :
- il faut pouvoir mettre en veille, c'est-à-dire inhiber l'ensemble des fonctions de l'équipement à l'exclusion du minimum nécessaire au réveil de l'équipement, lorsque celui-ci n'est plus utilisé ;
- il faut pouvoir réveiller l'équipement lorsque celui-ci est nécessaire. Cette nécessité peut être directe si par exemple l'utilisateur souhaite interagir directement sur cet équipement, ou indirecte si cet équipement est requis pour une utilisation convenable d'un autre équipement (par exemple dans le cas d'un modem lorsqu'une connexion Internet est requise depuis un ordinateur) ;
- il est préférable d'ajuster le niveau de consommation d'un équipement selon l'utilisation qui en est faite, lorsque cet équipement présente plusieurs états distincts.

Des travaux de réduction de la consommation des équipements électriques ont été réalisés, notamment pour permettre d'interagir à faible coût avec ces équipements. C'est par exemple le cas de dispositifs pour relever la consommation électrique des équipements de la maison. Ces dispositifs sont basés sur la technologie Zigbee peu coûteuse et faiblement consommatrice d'énergie électrique.

Toutefois, le développement de solutions visant généralement à mettre les équipements en état de veille lorsqu'ils ne sont pas utilisés est limité en raison d'un grand nombre d'inconvénients :
- les solutions sont principalement basées sur la seule analyse de l'utilisation même de l'équipement à contrôler (par exemple mode veille activé après un laps de temps d'inactivité), ce qui empêche de tenir compte du comportement du réseau local dans son ensemble et de la possible interaction avec un autre équipement ou un élément d'infrastructure ;
- lorsqu'une solution pour contrôler certains équipements est identifiée, il est nécessaire de la décliner dans toutes les technologies mises en oeuvre dans le réseau local. Cette déclinaison représente un coût considérable en temps et en argent ;
- une solution de gestion de la consommation électrique compatible avec un équipement ne l'est pas nécessairement avec les autres équipements ou éléments d'infrastructure du réseau, excluant de la sorte ces derniers du périmètre de gestion de la consommation. Il en résulte une consommation électrique non négligeable alors même que l'ensemble des équipements est inutilisé ;
- le réseau est bien souvent hétérogène : il met en oeuvre de nombreuses interfaces de communication différentes : WiFi, boîtiers de courant porteur, Interface ethernet. Il est donc difficile de déterminer les dépendances entre les équipements et les éléments d'infrastructure qui composent le réseau. Plus particulièrement, il est très difficile de déterminer quels sont les éléments d'infrastructure (routeurs, répartiteurs, boîtiers courant porteur) nécessaires à l'interconnexion de deux équipements (TV, ordinateur).

### 3 RESUME DE L'INVENTION

Pour pallier au moins l'un des inconvénients de l'art antérieur, il est un besoin de disposer d'une solution nouvelle de gestion globale de la consommation électrique d'un réseau local.

En effet, l'invention concerne un procédé de gestion de la consommation électrique dans un réseau de communication comprenant des équipements qui sont aptes à échanger des données et des éléments d'infrastructure qui sont aptes à interconnecter au moins deux desdits équipements via ledit réseau,

Selon l'invention, une unité de coordination met en oeuvre une base de données associant à un ensemble d'au moins deux équipements une liste d'éléments d'infrastructure nécessaires pour interconnecter lesdits équipements, et contrôle l'activation ou la désactivation d'éléments d'infrastructure en tenant compte de la liste correspondante, lorsqu'un ensemble d'équipements est sélectionné par un utilisateur, par l'intermédiaire de moyens de contrôle dont sont équipés au moins certains desdits équipements et/ou desdits éléments d'infrastructure, et le procédé met en oeuvre une procédure de mise à jour de ladite base de données lorsqu'un nouvel équipement ou un nouvel élément d'infrastructure est inséré dans ledit réseau de communication.

Ainsi, l'invention permet de gérer astucieusement la consommation électrique des équipements et des éléments d'infrastructure du réseau de communication en maintenant une base de données qui répertorie les éléments d'infrastructure nécessaires à la transmission de données entre deux équipements. Les éléments d'infrastructure sont par exemple des routeurs, des adaptateurs courant porteur, des points d'accès sans fil. Les équipements sont par exemple des ordinateurs, des consoles de jeu, des téléviseurs, des lecteurs multimédia. Il est également possible qu'un élément du réseau de communication soit à la fois un élément d'infrastructure et un équipement. C'est le cas par exemple d'une passerelle résidentielle.

Selon un mode de réalisation particulier, ladite procédure de mise à jour comprend une pluralité de phases de détermination de listes d'éléments d'infrastructure nécessaires pour interconnecter au moins deux desdits équipements dudit réseau de communication, une phase de détermination comprenant les étapes de :
- modification d'un état, parmi au moins un état d'activation et un état de désactivation, d'au moins certains éléments d'infrastructure ;
- détermination de la possibilité ou de l'impossibilité d'échanger des données entre lesdits au moins deux équipements, en fonction de ladite modification dudit état.

Ainsi, l'invention offre une méthode simple pour vérifier la possibilité d'échanger des données entre deux équipements.

Selon une caractéristique particulière, une étape de modification d'un état d'activation comprend, pour lesdits deux équipements :
- une étape de désactivation d'au moins un élément d'infrastructure ;
- une étape de transmission, d'un des deux équipements vers l'autre équipement, d'une requête de contrôle, délivrant une information représentative d'un fonctionnement d'une transmission de données entre lesdits deux équipements ;
- une étape d'ajout dudit au moins un élément d'infrastructure préalablement désactivé à une liste d'éléments d'infrastructure nécessaires à un échange de données entre lesdits deux équipements lorsque ladite information représentative d'un fonctionnement d'une transmission de données entre lesdits deux équipements est négative.

Ainsi, l'invention permet de procéder à un test de connexion simplement en réalisant une désactivation d'un élément d'infrastructure. Selon une caractéristique particulière, la désactivation est mise en oeuvre par l'unité de coordination. Pour ce faire, l'unité de coordination transmet une requête de désactivation aux moyens de contrôle de l'activation/désactivation de l'élément d'infrastructure par l'intermédiaire d'un deuxième réseau de communication.

Selon une caractéristique particulière, ledit procédé comprend, préalablement à ladite phase de détermination, une phase d'initialisation comprenant :
- une étape d'activation d'un desdits deux équipements ;
- une étape d' activation de l'autre équipement ;
- une étape d'activation desdits éléments d'infrastructure ;
- une étape de transmission, d'un des deux équipements vers l'autre équipement, d'une requête d'initialisation délivrant une information représentative d'un fonctionnement d'une transmission de données entre lesdits deux équipements.

Ainsi, l'invention permet de vérifier, préalablement à la détermination de la liste des éléments d'infrastructure nécessaires à une transmission de données entre au moins deux équipements, que l'ensemble des éléments d'infrastructure fonctionne correctement et qu'il est possible de transmettre des données d'un équipement à l'autre, indépendamment de l'inactivation de certains éléments d'infrastructure.

Selon une caractéristique particulière, ladite procédure de mise à jour comprend une étape de sélection d'un chemin privilégié entre deux équipements, lorsque plusieurs chemins possibles sont détectés, ladite sélection tenant compte de la consommation électrique associée à chaque chemin.

Selon une caractéristique particulière ladite étape de sélection tient compte également d'au moins une des informations appartenant au groupe comprenant le débit associé à chaque chemin ou le nombre d'équipements de chaque chemin.

Selon un mode de réalisation particulier, les moyens de contrôle forment un second réseau de communication et mettent en oeuvre un protocole de type ZigBee.

Selon une autre approche, l'invention concerne également une unité de coordination pour la gestion de la consommation électrique dans un réseau de communication comprenant des équipements qui sont aptes à échanger des données et des éléments d'infrastructure qui sont aptes à interconnecter au moins deux desdits équipements.

Selon l'invention, ladite unité de coordination comprend :
- une base de données associant à un ensemble d'au moins deux équipements une liste d'éléments d'infrastructure nécessaires pour interconnecter lesdits équipements,
- des moyens de contrôle de l'activation ou de la désactivation d'éléments d'infrastructure en tenant compte de la liste correspondante, lorsqu'un ensemble d'équipements est sélectionné par un utilisateur,
- et des moyens de mise à jour de ladite base de données, lorsqu'un nouvel équipement ou un nouvel élément d'infrastructure est inséré dans ledit réseau de communication.

Selon une autre approche, l'invention concerne également un système de gestion de la consommation électrique dans un réseau de communication comprenant des équipements qui sont aptes à échanger des données et des éléments d'infrastructure qui sont aptes à interconnecter au moins deux desdits équipements via ledit réseau. Selon l'invention une unité de coordination met en oeuvre une base de données associant à un ensemble d'au moins deux équipements une liste d'éléments d'infrastructure nécessaires pour interconnecter lesdits équipements, et contrôle l'activation ou la désactivation d'éléments d'infrastructure en tenant compte de la liste correspondante, lorsqu'un ensemble d'équipements est sélectionné par un utilisateur, par l'intermédiaire de moyens de contrôle dont sont équipés au moins certains desdits équipements et/ou desdits éléments d'infrastructure, et ladite unité de coordination met en oeuvre une procédure de mise à jour de ladite base de données lorsqu'un nouvel équipement ou un nouvel élément d'infrastructure est inséré dans ledit réseau de communication.

Les différents modes de réalisation mentionnés ci-dessus sont combinables entre eux pour la mise en oeuvre de l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, settop-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 représente un exemple de réseau domestique ;
- la figure 2 représente un réseau de modules radio montés en parallèle du réseau domestique de la figure 1, pour la mise en oeuvre de la présente invention ;
- la figure 3 illustre un exemple de structure d'un équipement du réseau domestique, équipé d'un module radio ;
- la figure 4 illustre les principales étapes du procédé de gestion de l'invention ;
- la figure 5 illustre un mode de réalisation du procédé de gestion selon l'invention contenant les principales étapes préalablement illustrées en figure 4.

### 5 DESCRIPTION DETAILLEE DE L'INVENTION

### 5.1 Rappel du principe de l'invention

L'invention propose de rechercher les dépendances entre éléments d'infrastructure et équipements dans le réseau de communication afin de pouvoir commander l'activation ou la désactivation de ces équipements et éléments d'infrastructure lors de leurs utilisations. Par la suite les éléments d'infrastructure et les équipements qui y sont connectés sont appelés de manière générale éléments de réseau. Ainsi que cela a déjà été mentionné, le contexte de l'invention est relatif à la réduction de consommation électrique des éléments composant un réseau domestique (passerelle résidentielle, décodeur TV, ordinateur, stockage réseaux). Or, le partage de contenus numériques (photos, videos, musiques, etc.) entre les éléments du réseau domestique (exemple : visionner un film stocké sur le disque dur d'un ordinateur, à l'aide du décodeur TV), oblige à les laisser allumés en permanence pour que les contenus qu'ils partagent, soient disponibles.

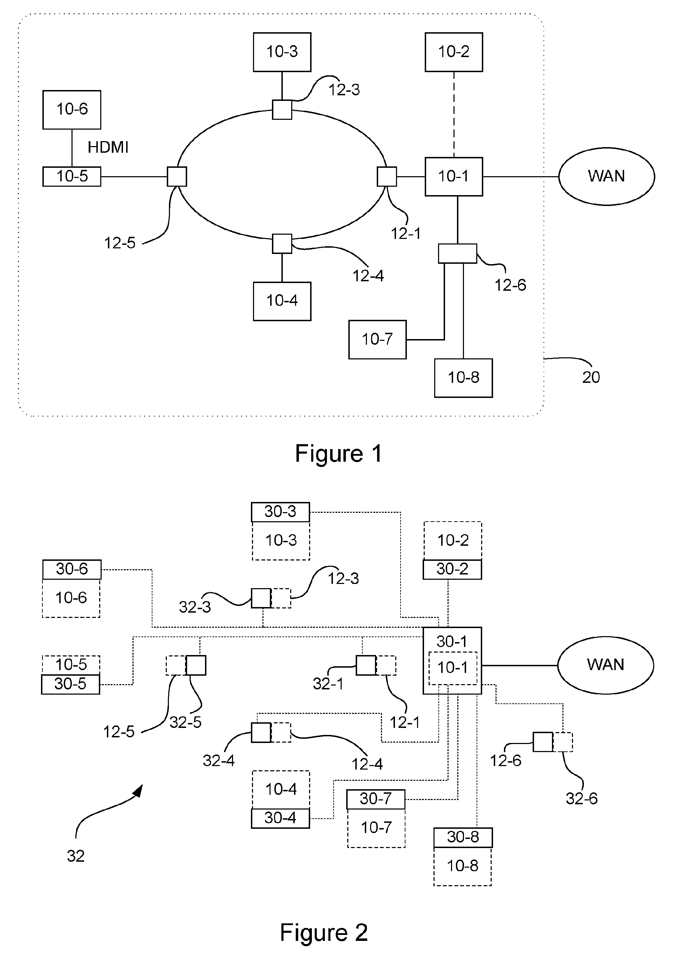

La **figure 1** représente un réseau local 20, qui, dans l'exemple représenté, est un réseau domestique. Un tel réseau 20 comprend une pluralité d'équipements électroniques 10-i. Dans cet exemple, le réseau 20 comprend une passerelle résidentielle 10-1 vers un réseau étendu WAN type Internet et offrant donc des capacités de connexion au réseau Internet, et des équipements tels qu'un ordinateur portable 10-2 relié à la passerelle 10-1 par liaison Wifi (trait en pointillé). Le réseau 20 comprend également un ordinateur fixe 10-3, un disque réseau de stockage 10-4 et un décodeur 10-5 de télévision. Il est entendu que tout type de réseau local 20, par exemple Wifi, Ethernet, etc... peut faire l'objet de la présente invention.

Le réseau domestique 20 de la **figure 1** comprend également un poste de télévision 10-6 relié au décodeur 10-5 pour afficher un contenu multimédia reçu via l'Internet, le satellite, le câble, la TNT ... et/ou tout contenu multimédia stocké dans le réseau domestique 20.

Dans l'exemple représenté, la passerelle 10-1, l'ordinateur fixe 10-3, le disque réseau de stockage 10-4 et le décodeur 10-5 de télévision sont reliés au réseau local 20 par lien Ethernet (traits pleins), à l'aide d'éléments d'infrastructure. Ces éléments d'infrastructure sont par exemple des prises PLT 12-j de type à courants porteurs en ligne (CPL pour Courant Porteur en Ligne ou PLT pour *"power line telecommunication"),* respectivement 12-1, 12-3, 12-4, 12-5 ou encore des routeurs, des concentrateurs. Les ordinateurs 10-7, 10-8 sont eux directement connectés à la passerelle résidentielle 10-1 en passant par un concentrateur (12-6).

La présente invention est, pour une certaine part, relative à la gestion de la consommation électrique des divers éléments 10-i et 12-j. Les éléments tels que les ordinateurs 10-2 et 10-3, la télévision 10-6, le disque de stockage 10-4 et les prises PLT 12-j présentent généralement deux états principaux de fonctionnement: un état dit de veille (légère ou profonde; nommé OFF) qui correspond à la cessation temporaire d'une activité pour ces éléments et correspond à une consommation électrique réduite au maximum, et un état dit de marche (ou allumé; nommé ON) qui correspond au mode normal de fonctionnement de l'élément pour fournir un service et à une consommation électrique maximale. Pendant l'état de veille, des services minima de réveil sont prévus et connus de l'homme de l'art, aux fins de pouvoir relancer l'élément en mode de marche.

Certains éléments peuvent présenter un plus grand nombre d'états de consommation électrique. Par exemple, le décodeur 10-5 présente, dans notre exemple, trois états de fonctionnement: un état (V) de veille; un état (E1) dans lequel la liaison Ethernet avec le réseau 20 est active et une liaison HDMI de sortie vers la télévision 10-6 est également active; et un état intermédiaire (E2) dans lequel seule la liaison Ethernet est active, correspondant ainsi à une fonctionnalité d'enregistrement d'un signal TV sans affichage sur la télévision.

Il est entendu que l'invention ne se limite pas à ces exemples d'états de fonctionnement, le décodeur 10-5 pouvant par exemple offrir de nouvelles fonctionnalités (Wifi pour l'ordinateur 10-2 par exemple ou pour un autre élément comme un smartphone) et donc un plus grand nombre d'états de fonctionnement selon l'activation ou non de cette fonctionnalité.

Comme on le verra par la suite, la passerelle résidentielle 10-1 présente également plusieurs états selon l'activation ou non de fonctionnalités Wifi, ADSL, téléphonie sur IP (VoIP), etc.

On constate facilement, suite aux explications fournies en relation avec la figure 1, que la recherche des dépendances entre les éléments du réseau est importante pour pouvoir déterminer quels sont les éléments d'infrastructure de réseau dont les états de fonctionnement doivent être modifiés pour permettre un échange de données entre deux équipements.

Pour rechercher les dépendances entre les éléments dans le réseau de communication, l'invention propose d'associer à chaque élément du réseau, un module radio à faible consommation et faible coût (exemple technologie Zigbee). L'ensemble de ces modules constitue alors un réseau de contrôle permettant de piloter (allumer, mettre en sommeil ou éteindre) chacun des équipements du réseau domestique. La réduction de la consommation électrique est maximale lorsque les éléments sont par défaut éteints ou en veille, puis allumés (via le réseau de contrôle) le temps où leur fonctionnement est nécessaire pour rendre le service.

Pour rechercher les dépendances entre les éléments dans le réseau de communication selon l'invention comme décrit ci-après, ces divers éléments 10-i et 12-j sont équipés chacun d'un module de communication radio à faible consommation électrique, (par exemple un module Zigbee conforme à la norme du même nom) de sorte à constituer un réseau ad hoc de communication 32 en parallèle (ou dit "overlay") comme illustré sur la **figure 2****.** De tels modules radio sont désignés par la référence numérique 30-k sur la **figure 2****.**

Parfois, il existe déjà, localement, un réseau domotique de type Zigbee pour piloter des équipements de la maison tels que l'électroménager, le chauffage, les volets, les lumières. Dans ce cas, les modules Zigbee (30-k, 32-1) ajoutés aux éléments du réseau local 20 peuvent être intégrés au réseau domotique Zigbee préexistant, de sorte à n'avoir localement qu'un seul réseau Zigbee. Sur ce dernier, co-habitent donc deux utilisations : d'une part, le pilotage domotique préexistant et, d'autre part, le contrôle global de la consommation électrique selon l'invention.

Le protocole Zigbee, basé sur la norme IEEE 802.15.4, est connu de l'homme de l'art et ne sera par conséquent pas détaillé ici. A noter que les modules Zigbee 30-k, 32-1 permettent une communication de quelques dizaines de mètres adaptés à un environnement domestique, et présentent des fonctions de routage pour assurer la propagation des messages de modules en modules (les modules d'un réseau Zigbee font office de noeud de réseau).

Dans l'exemple représenté, le module 30-1 de la passerelle résidentielle 10-1 est choisi comme unité de coordination du réseau de contrôle 32.

En variante, dans le cas de la coexistence d'un réseau domotique du type mentionné ci-dessus, l'unité de coordination pourrait être contenue dans le module de gestion du réseau domotique, tel qu'un module HAB (de l'anglais : *"Home Automation Box").*

Selon l'invention, un équipement dit référent est configuré pour déterminer, en fonction de l'utilisation faite desdits éléments, un état correspondant d'au moins un élément, et pour transmettre audit élément, via le réseau de contrôle 32, un message de pilotage dans l'état déterminé. Notamment, dans un mode de réalisation, la passerelle résidentielle 10-1 est choisie comme équipement référent en raison de sa présence permanente dans le réseau 20.

Dans le cas où le noeud coordinateur du réseau de contrôle 32 est le module HAB du réseau domotique préexistant, cela signifie que le noeud coordinateur et l'équipement référent sont distincts. Toutefois, en variante, on peut prévoir que ces deux fonctions sont regroupées au sein du seul module HAB car ce dernier est notamment toujours sous tension pour assurer la pérennité du réseau domotique.

Comme il sera vu plus en détail par la suite, le suivi des utilisations faites des différents équipements du réseau 20 est réalisé par l'envoi, au travers du réseau de contrôle 32, de messages visant à informer l'équipement référent de changements d'utilisation par les équipements.

Ainsi, l'équipement référent peut, à l'aide d'une simple table de correspondances, déterminer quels états électriques appliquer à chacun des équipements en fonction des utilisations faites. Cette détermination est notamment globale: les informations relatives aux utilisations de plusieurs équipements peuvent être prises en compte pour piloter un changement d'état d'un équipement particulier.

Ces messages ou commandes pour piloter le changement sont envoyés, via le réseau Zigbee, aux équipements visés par un changement d'état. L'information transmise peut soit être l'indication d'un état particulier, par exemple V, E1 ou E2, l'équipement destinataire ayant alors connaissance de la correspondance entre cet état particulier et l'activation/désactivation de certaines de ses fonctions, soit être l'indication de quelles fonctions à activer et quelles fonctions à désactiver.

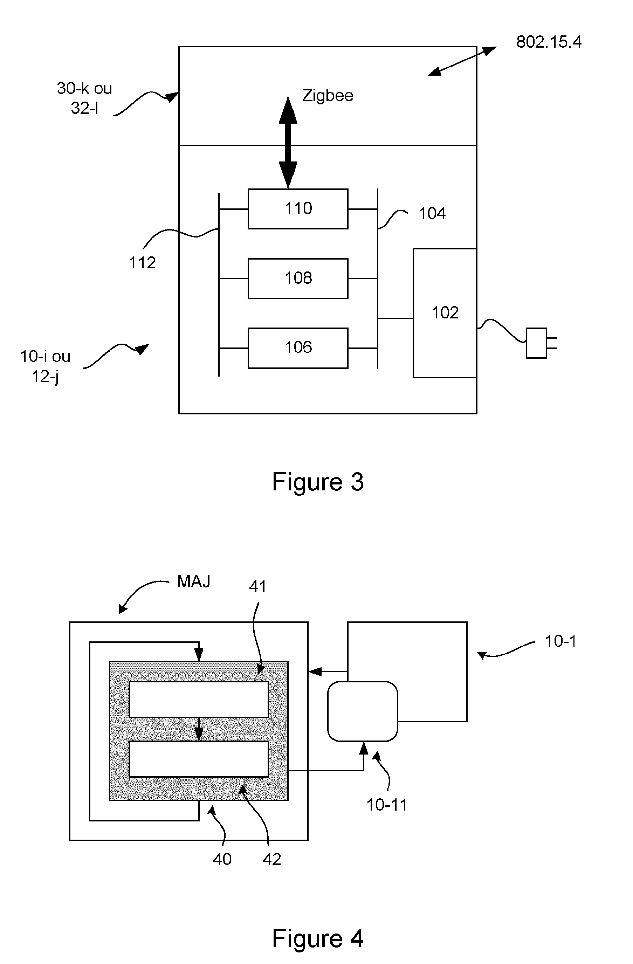

La **figure 3** montre, de façon schématique, l'architecture d'un élément 10-i ou 12-j selon l'invention.

Un tel élément possède une alimentation électrique 102 reliée d'une part au réseau électrique et d'autre part à un bus électrique 104 de l'élément de sorte à approvisionner les composants de l'élément en énergie électrique.

L'élément 10-i ou 12-j comprend de façon classique une unité centrale de traitement ou "microprocesseur" 106, des mémoires morte et vive 108 pour stocker et charger les programmes dont l'exécution assure les fonctionnalités de l'élément, ainsi que des interfaces 110 permettant à cet élément d'interagir. Ces composants sont interconnectés par un bus de données 112.

Ces interfaces 110 comprennent par exemple des interfaces réseau permettant la liaison avec une prise PLT 12-j, des interfaces utilisateur telles que des boutons, un écran ou afficheur, un clavier, etc., des ports de communication, par exemple série, HDMI, USB, etc.

L'élément 10-i respectivement 12-j est également équipé d'un module radio 30-k, respectivement 32-1 via l'une des interfaces 110, par exemple connecté à un port USB de l'élément. Ce module radio (30-k, 32-1) est capable de communiquer via la norme IEEE 802.15.4 avec d'autres modules radio à proximité et présente des fonctions classiques de routage.

Lorsque chaque élément du réseau est associé à un module radio du réseau de contrôle, comme cela a par exemple été décrit préalablement, la solution proposée offre un moyen de découvrir de manière automatique les dépendances (interconnexion) entre les éléments du réseau en utilisant le réseau de contrôle pour explorer les interconnexions entre les éléments du réseau.

Du point de vue du réseau de contrôle 32, les éléments du réseau sont divisés en deux catégories : les équipements 10-i qui échangent des données (exemple : ordinateur, décodeur TV), et les « éléments d'infrastructure » 12-j (adaptateurs courants porteurs, commutateurs, relais) qui transportent les données d'un équipement à un autre. Certains équipements peuvent également jouer un rôle d'élément d'infrastructure : c'est par exemple le cas de la passerelle résidentielle 10-1 ou d'un décodeur TV 10-5 représentés sur la **figure 1****.**

Pour réduire fortement la consommation électrique des ces éléments hétérogènes, le problème qui se pose est de connaître quels sont les éléments d'infrastructure qui interviennent dans l'échange de données entre deux équipements et donc de connaître les dépendances entre les éléments du réseau. Ainsi, le réseau de contrôle peut savoir quels éléments du réseau il est nécessaire d'allumer pour rendre le service et éteindre ou mettre en veille ceux qui ne sont pas indispensables au service.

Dans une première approche, la découverte des dépendances est mise en oeuvre par une méthode qui consiste à couper (éteindre), via le réseau de contrôle 32, un à un les éléments d'infrastructure 12-j (exemple : adaptateurs courants porteurs, commutateurs), puis à vérifier que la connexion réseau entre deux équipements est possible (exemple : ping entre ordinateur et décodeur TV). La procédure est répétée de manière itérative pour déterminer l'arbre des dépendances entre les éléments du réseau. Cette méthode est globalement illustrée en relation avec la **figure 4****.** Cette méthode est mise en oeuvre de manière centralisée par l'intermédiaire d'une unité de coordination Dans un mode de réalisation spécifique, tel que présenté en **figure 4****,** cette unité de coordination est installée au sein de la passerelle résidentielle 10-1 de l'utilisateur. En effet, de par sa position centrale, cette passerelle résidentielle est l'élément du réseau qui est en état de fonctionnement de façon quasi permanente. Cette unité de coordination 10-1 met en oeuvre une base de données 10-11 associant à un ensemble d'au moins deux équipements 10-i (par exemple TV/Ordinateur) une liste d'éléments d'infrastructure 12-j nécessaires pour interconnecter ces équipements. Cette unité de coordination 10-1 contrôle l'activation ou la désactivation d'éléments d'infrastructure 12-j en tenant compte de la liste correspondante, lorsqu'un ensemble d'équipements est sélectionné par un utilisateur, par l'intermédiaire de moyens de contrôle (30k, 32-1) dont sont équipés au moins certains des équipements 10-i et/ou des éléments d'infrastructure 12-j. Le procédé de l'invention met en oeuvre une procédure de mise à jour MAJ de la base de données 10-11 lorsqu'un nouvel équipement 10-i ou un nouvel élément d'infrastructure 12-j est inséré dans le réseau de communication.

La procédure de mise à jour MAJ, quand à elle, comprend une pluralité de phases de détermination de listes d'éléments d'infrastructure 12-j nécessaires pour interconnecter au moins deux des équipements 10-i dudit réseau de communication. Une phase de détermination 40 comprend les étapes de :
- modification 41 d'un état, parmi au moins un état d'activation et un état de désactivation, d'au moins certains éléments d'infrastructure ;
- détermination 42 de la possibilité ou de l'impossibilité d'échanger des données entre les deux équipements, en fonction de ladite modification dudit état (transmission d'une requête « ping » entre les deux équipements par exemple).

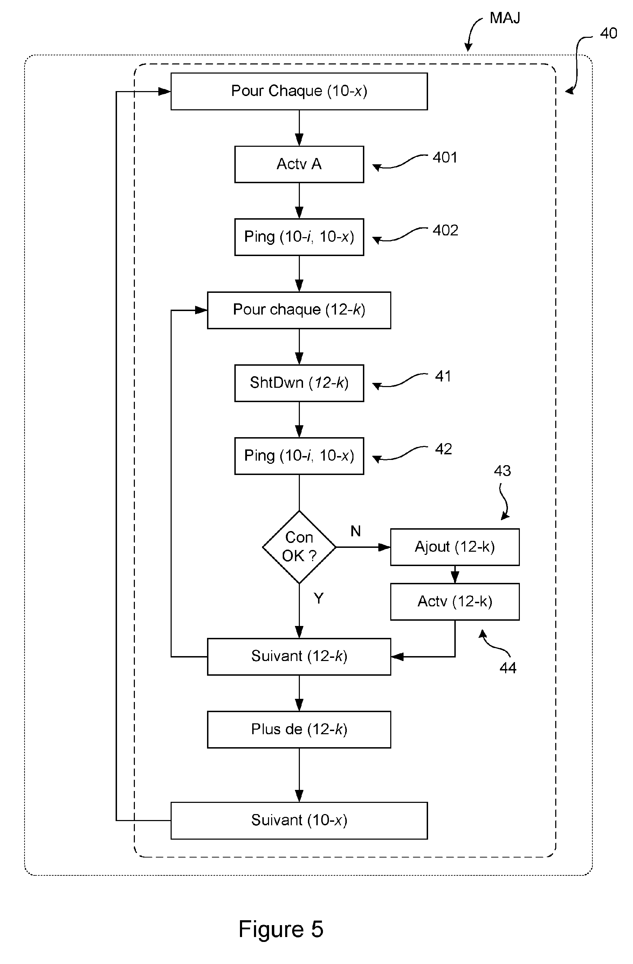

La découverte des dépendances réseaux, par la mise en oeuvre de cette procédure de mise à jour MAJ est réalisée à chaque fois qu'un nouvel équipement ou qu'un nouvel élément d'infrastructure se connecte au réseau de contrôle. D'autres caractéristiques particulières peuvent être mises en oeuvre en fonction de contraintes physiques, logicielles ou d'une topologie particulière de réseau de communication. Certaines de ces caractéristiques sont décrites par la suite en relation avec un mode de réalisation particulier **(****figure 5****).**

Dans une deuxième approche, la découverte des dépendances est mise en oeuvre de manière distribuée. La découverte des dépendances s'effectue de proche en proche. Le module radio d'un équipement est en charge de la découverte, par l'intermédiaire des autres modules radio du réseau de contrôle, des autres équipements du réseau et par la même des éléments d'infrastructure qui ont été nécessaires pour atteindre ces autres équipements. Cette deuxième approche est adaptée aux réseaux de communication qui ne comportent pas d'équipements allumés en permanence (comme la passerelle résidentielle utilisée en première approche).

### 5.2 Description d'un mode de réalisation itératif de la détermination des dépendances

On présente dans ce mode de réalisation, en relation avec la **figure 5****,** la mise en oeuvre de la première approche, c'est-à-dire une mise en oeuvre centralisée de la découverte des éléments d'infrastructure 12-j nécessaires à l'échange de données entre deux équipements 10-i.

Initialement le réseau n'est composé que d'un seul équipement (exemple la passerelle résidentielle 10-1) associé à une unité de coordination (coordinateur zigbee 30-1) en charge de la gestion du réseau de contrôle.

Lors de l'ajout d'un équipement 10-i (exemple : ordinateur, décodeur TV), l'utilisateur le connecte au réseau de manière habituelle (à l'aide d'un câble Ethernet, une connexion Wifi, ou bien à l'aide d'adaptateurs courants-porteurs, ...). Le module radio « zigbee » 30-k qui lui est associé s'accroche au réseau de contrôle 32 et fournit les informations réseau de l'équipement (adresse IP, masque de sous-réseau et passerelle par défaut). L'équipement offre au réseau de contrôle via le module radio « zigbee » un moyen pour tester la connectivité réseau (exemple : fonction « ping » vers un autre équipement).

Lors de l'ajout d'un élément d'infrastructure 12-j (adaptateurs courants porteurs, commutateurs, répéteur), l'utilisateur le connecte au réseau de manière habituelle. Le module zigbee 32-1 qui lui est associé s'accroche au réseau de contrôle 32 et fournit un moyen pour commander l'élément d'infrastructure (mise en veille, réveil, arrêt, mise en marche, activation/désactivation d'une interface réseau).

Pour présenter ce mode de réalisation de l'invention, en relation avec la figure 5, les notations suivantes sont adoptées : Soit 10-2, ...,10-i l'ensemble des équipements du réseau, 12-1....,12-j, l'ensemble des éléments d'infrastructure ou interfaces réseaux et 10-1 la passerelle par défaut de l'équipement 10-i (ces notations sont les mêmes que celles employées dans les figures précédentes, pour plus de simplicité).

La découverte des dépendances réseaux comprenant la mise à jour MAJ de la base de données 10-11 de l'unité de coordination (la passerelle 10-1) s'effectue de la manière suivante :
- Pour chacun des équipements 10-i du réseau (i variant de 1 au nombre d'équipements), on met en oeuvre une pluralité de phases de détermination de dépendance 40 qui comprend, dans ce mode de réalisation, les étapes suivantes :
   - Pour chaque équipement d'une liste contenant la passerelle 10-1 et les équipements 10-x (10-x choisit avec x variant de 1 au nombre d'équipements ; x ≠ i et 10-i et 10-x appartenant au même sous-réseau).
      - une phase d'initialisation comprenant :
         - activation 401 de tous les éléments d'infrastructure ou interfaces réseaux (si besoin attente temps activation) ;
         - vérification 402 que la connexion entre 10-i et 10-x est fonctionnelle en réalisant une transmission, d'un des deux équipements vers l'autre équipement, d'une requête d'initialisation délivrant une information représentative d'un fonctionnement d'une transmission de données entre les deux équipements 10-i et 10-x (ping entre 10-i et 10-x), (si ce n'est pas le cas on peut inviter l'utilisateur à revoir les connexions entre les équipements et les éléments d'infrastructure).
   - Pour chacun des éléments d'infrastructure 12-k (k variant de 1 au nombre d'éléments d'infrastructure du réseau), on met en oeuvre une phase de détermination de listes d'éléments d'infrastructure nécessaires pour interconnecter au moins deux desdits équipements qui comprend les étapes suivantes :
      - modification de l'état de l'élément 12-k en réalisant une désactivation 41 de l'élément 12-k par l'intermédiaire de son module radio 32-k associé ;
      - détermination de la possibilité ou de l'impossibilité d'échanger des données entre les équipements 10-i et 10-x en réalisant une vérification 42 d'une connexion réseau entre les équipements 10-i et 10-x (ping entre 10-i et 10-x).
      - si la connexion entre 10-i et 10-x n'est pas vérifiée (N) (absence de réponse au ping) alors l'élément 12-k est ajouté 43 à la liste des dépendances, puis activé 44 à nouveau (12-k nécessaire pour que 10-i et 10-x soient connectés), et on passe à l'élément suivant.
      - si la connexion entre 10-i et 10-x est vérifiée (Y), on passe à l'élément suivant.
- Quand tous les éléments d'infrastructure 12-k ont été testés, on passe à un équipement suivant.

Dans ce mode de réalisation, la découverte des dépendances réseau est donc effectuée de manière itérative (une pluralité de phases 40). À l'issue de cette phase de découverte, pour chacune des connexions possibles entre deux équipements (10-i et 10-x) du réseau, une liste des éléments d'infrastructure (et/ou des fonctions ou interfaces de ces équipements) nécessaires pour réaliser la connexion est disponible. Cette liste est enregistrée au sein de la base de données 10-11 et est ainsi disponible pour l'unité de coordination 10-1.

Selon une variante de réalisation, non représentée, seule une fonction ou une interface particulière de l'élément 12-k est désactivée (lorsque cet élément possède plus d'une fonction ou d'une interface).

Selon un mode de réalisation particulier, non représenté, une optimisation possible de la création des dépendances consiste à réduire le nombre d'itérations en partant du postulat que la vérification d'une connexion réseau entre un équipement 10-i et un équipement 10-x est identique à celle entre ce même équipement 10-x et ce même équipement 10-i (notion de bidirectionnalité).

### 5.3 Autres caractéristiques optionnelles et avantages

L'invention s'applique à un réseau domestique, où les éléments coopèrent de façon à réduire la consommation électrique de l'ensemble du réseau.

L'invention peut être généralisée à d'autres types de réseaux pour lequel on souhaite établir un graphe de dépendance entre des éléments, à condition de pouvoir retirer des éléments et vérifier la connexion ou le lien entre deux éléments dont on désire connaître les dépendances vis-à-vis des autres éléments.

Un autre avantage procuré par l'invention est de pouvoir fournir au client une liste d'éléments réseaux qui interviennent dans la fourniture d'un service. Il est ainsi possible d'indiquer au client, de manière interactive, les équipements et éléments d'infrastructure à vérifier si ce service est défectueux.

Par exemple, la méthode proposée étant capable de déterminer la liste des dépendances entre les éléments du réseau, si par exemple le décodeur TV ne parvient plus à joindre la plateforme de service, alors la méthode selon l'invention permet de donner la liste des éléments à vérifier (exemple : adaptateurs courant-porteurs, passerelle). La solution permet aussi de donner une représentation graphique de l'architecture réseau (ce qui peut être intéressant pour des services de maintenance par exemple).

L'invention permet également de déterminer des chemins entre les différents éléments du réseau. Par chemin on entend un ensemble d'éléments d'infrastructure aptes à faire communiquer deux équipements. De part la technique mise en oeuvre, l'invention permet, le cas échéant, de déterminer plusieurs chemins qui peuvent permettre un échange de données entre deux équipements. Dans ce cas, l'invention permet de sélectionner, parmi les chemins disponibles, un chemin particulier selon un critère particulier. Selon une caractéristique particulière, ce critère peut être un critère de consommation électrique. Le chemin dont la consommation électrique est la plus faible peut par exemple être privilégié.

De plus, l'invention est extrêmement simple à mettre en oeuvre par rapport à des solutions plus complexes comme le protocole de découverte de topologie réseau (exemple protocole LLTD ― Link Layer Topology Discovery).

## Revendications

1. Procédé de gestion de la consommation électrique dans un réseau de communication comprenant des équipements (10-2...10-i) qui sont aptes à échanger des données et des éléments d'infrastructure (12-1...12-k) qui sont aptes à interconnecter au moins deux desdits équipements (10-2...10-i) via ledit réseau, **caractérisé en ce qu'**une unité de coordination (10-1) met en oeuvre une base de données (10-11) associant à un ensemble d'au moins deux équipements une liste d'éléments d'infrastructure nécessaires pour interconnecter lesdits équipements, et contrôle l'activation ou la désactivation d'éléments d'infrastructure en tenant compte de la liste correspondante, lorsqu'un ensemble d'équipements est sélectionné par un utilisateur, par l'intermédiaire de moyens de contrôle dont sont équipés au moins certains desdits équipements et/ou desdits éléments d'infrastructure,
et **caractérisé en ce qu'**il met en oeuvre une procédure de mise à jour (MAJ) de ladite base de données (10-11) lorsqu'un nouvel équipement (10-i) ou un nouvel élément d'infrastructure (12-k) est inséré dans ledit réseau de communication.

2. Procédé selon la revendication 1, **caractérisé en ce que** ladite procédure de mise à jour comprend une pluralité de phases de détermination de listes d'éléments d'infrastructure (12-j) nécessaires pour interconnecter au moins deux desdits équipements (10-i) dudit réseau de communication, une phase de détermination (40) comprenant les étapes de :
- modification d'un état, parmi au moins un état d'activation et un état de désactivation, d'au moins certains éléments d'infrastructure ;
- détermination de la possibilité ou de l'impossibilité d'échanger des données entre lesdits au moins deux équipements, en fonction de ladite modification dudit état.

3. Procédé selon la revendication 2, **caractérisé en ce qu'**une étape de modification d'un état d'activation comprend, pour lesdits deux équipements :
- une étape de désactivation (41) d'au moins un élément d'infrastructure ;
- une étape de transmission (42), d'un des deux équipements vers l'autre équipement, d'une requête de contrôle, délivrant une information représentative d'un fonctionnement d'une transmission de données entre lesdits deux équipements ;
- une étape d'ajout (43) dudit au moins un élément d'infrastructure préalablement désactivé à une liste d'éléments d'infrastructure nécessaires à un échange de données entre lesdits deux équipements lorsque ladite information représentative d'un fonctionnement d'une transmission de données entre lesdits deux équipements est négative.

4. Procédé selon la revendication 2, **caractérisé en ce qu'**il comprend, préalablement à ladite phase de détermination, une phase d'initialisation comprenant :
- une étape d'activation (401) d'un desdits deux équipements ;
- une étape d'activation (401) de l'autre équipement ;
- une étape d'activation (401) desdits éléments d'infrastructure ;
- une étape de transmission (402), d'un des deux équipements vers l'autre équipement, d'une requête d'initialisation délivrant une information représentative d'un fonctionnement d'une transmission de données entre lesdits deux équipements.

5. Procédé selon la revendication 1, **caractérisé en ce que** ladite procédure de mise à jour comprend une étape de sélection d'un chemin privilégié entre deux équipements, lorsque plusieurs chemins possibles sont détectés, ladite sélection tenant compte de la consommation électrique associée à chaque chemin.

6. Procédé selon la revendication 1, **caractérisé en ce que** les moyens de contrôle forment un second réseau de communication et mettent en oeuvre un protocole de type ZigBee.

7. Unité de coordination pour la gestion de la consommation électrique dans un réseau de communication comprenant des équipements qui sont aptes à échanger des données et des éléments d'infrastructure qui sont aptes à interconnecter au moins deux desdits équipements,
ladite unité de coordination étant **caractérisée en ce qu'**elle comprend :
- une base de données associant à un ensemble d'au moins deux équipements une liste d'éléments d'infrastructure nécessaires pour interconnecter lesdits équipements,
- des moyens de contrôle de l'activation ou de la désactivation d'équipements en tenant compte de la liste correspondante, lorsqu'un ensemble d'équipements est sélectionné par un utilisateur,
- et des moyens de mise à jour de ladite base de données, lorsqu'un nouvel équipement ou un nouvel élément d'infrastructure est inséré dans ledit réseau de communication.

8. Système de gestion de la consommation électrique dans un réseau de communication comprenant des équipements qui sont aptes à échanger des données et des éléments d'infrastructure qui sont aptes à interconnecter au moins deux desdits équipements via ledit réseau, **caractérisé en ce qu'**une unité de coordination est adaptée pour mettre en oeuvre une base de données associant à un ensemble d'au moins deux équipements une liste d'éléments d'infrastructure nécessaires pour interconnecter lesdits équipements, et pour contrôler l'activation ou la désactivation d'élément d'infrastructure en tenant compte de la liste correspondante, lorsqu'un ensemble d'équipements est sélectionné par un utilisateur, par l'intermédiaire de moyens de contrôle dont sont équipés au moins certains desdits équipements et/ou desdits éléments d'infrastructure,
et **caractérisé en ce que** ladite unité de coordination est adaptée pour mettre en oeuvre une procédure de mise à jour de ladite base de données lorsqu'un nouvel équipement ou un nouvel élément d'infrastructure est inséré dans ledit réseau de communication.

9. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de gestion selon l'une au moins des revendications 1 à 6, lorsqu'il est exécuté sur un processeur.
